# EUROPEAN PATENT APPLICATION

(11) **EP 3 777 619 A1**
(43) Date of publication of application: **17.02.2021**
(21) Application number: 19191502.4
(22) Date of filing: 13.08.2019
(51) Int. Cl.: A47J 31/44

(54) **WATER LEVEL DETECTION DEVICE**

(71) Applicant: BSH Hausgeräte GmbH, 81739 München (DE)
(72) Inventor: Kozelj, Evgen, 3327 Smartno ob Paki (SI); Mesko, Ales, 3240 Smarje pri Jelsah (SI); Reichel, Thomas, 83278 Traunstein (DE)

(57) **Abstract**

The invention relates to a water level detection device in particular for a water collecting container comprising a floater with an indication element, a metallic element and a magnet, wherein a first position of the floater in which the metallic element and the magnet are connected by a magnetic force and a second position of the floater in which the metallic element and the magnet are disconnected due to a water lifting force.

The present invention enables a coffee machine with a water level detection device inside a water collecting container of a simple construction and reliable functioning.

## Description

### Background of the invention

The present invention relates to a water level detection device, in particular for a water collecting container comprising a floater with an indication element, a metallic element and a magnet.

### State of the art

The patent application CN 1 03 654 395 A discloses a waste water level detecting device for a coffee machine. The waste water level detecting device is characterized by comprising a waste water box, a waste water box cover and a detecting device body; the detecting device body is connected with a coffee machine control system, the waste water box is internally provided with a cavity for containing the detecting device body, and the waste water box cover is arranged on the waste water box; the detecting device body comprises a detecting component for detecting the water level and a feedback component for feeding back a water level signal of the detecting component, the detecting component is arranged inside the cavity and matched with the feedback component, and the feedback component is arranged on the waste water box. By the adoption of the technical scheme, the waste water level detecting device has the advantages that the on-off state of a magnetic switch is changed by the vertical moving of a magnetic floating ball, and different signals can be fed back to achieve the detecting purpose. The waste water level detecting device is simple in structure, reliable in performance and low in cost, the humanization and intelligent performance of the full-automatic coffee machine are achieved.

The utility model CN 2 04 071 751 U discloses a coffee maker capable of automatically detecting a water level comprises a main body and a water tank. A driving power supply, a heating device and a water level detection device are arranged in the main body, the water tank is communicated with the heating device in the main body through a connecting pipe, the water level detection device comprises a capacitive sensing detection circuit and two capacitive electrode probes electrically connected with the capacitive sensing detection circuit, the capacitive electrode probes are arranged outside the water tank, the capacitive sensing detection circuit comprises an MCU (micro-programmed control unit) and a primary differential circuit electrically connected with the MCU, and the two capacitive electrode probes are oppositely fitted on the inner wall of the main body. Alternatively, the capacitive sensing detection circuit comprises the MCU, the two capacitive electrode probes are in the shapes of triangular or trapezoidal flat sheets, and the beveled edges of the two capacitive electrode probes are mutually butted to form an integral square or parallelogram. The coffee maker has the advantages of simple and reasonable structure, operational flexibility, wide application range and judging accuracy.

A patent application US 5 901 636 A discloses a coffee maker which comprises a water reservoir, a water heating and supply device for supplying hot water to a filter device, the brewed coffee flowing from the filter device to a receptacle. The coffee maker includes a level detection circuit for detecting the water level in the reservoir, and this water level is used to control the brewing process so as to vary the flow of hot water of the filter device in dependence upon the water level in the reservoir. The water level may be used to control the power of a heating element in a continuous heater or may be used to control the operation of a pump in a pumped system.

Presented solutions do not provide a water level detecting device which gives the customer an immediate indication of the exceeded waste water level.

### The aim of the invention

It is the object of the present invention to provide a further development with an advantage over the state of the art and provide a system for controlling a home appliance by the water level detecting device which is adapted to give the customer an immediate information about the exceeded waste water level in the water collecting container of a coffee machine.

### Summary of the invention

The object is solved by a water level detection device, in particular for a water collecting container where in a first position of the floater the metallic element and the magnet are connected by a magnetic force and in a second position of the floater the metallic element and the magnet are disconnected due to a water lifting force.

The water level detection device is a device which detects the level of the water inside the water collecting container and informs the user that the water level exceeds its maximum value so the consumer knows that the water collecting container should be emptied what prevents the residual water from spilling over the edge of the water collecting container. The water collecting container typically is a kind of a drawer which is placed at the bottom area of the coffee machine. The purpose of the water collecting container is to collect the residual water and condensed vapor which was created during the brewing process.

The water level detection device contains a floater made out of the light weight material of a high displacement. The floater is provided with an indication element which protrudes out of the main body of the floater. The purpose of the indication element is to inform the user about the water level in the water collecting container. The indication element is visible for the customer unlike the floater which is entirely hidden in the water collecting container.

In the first position of the floater, the metallic element and the magnet are connected each other by a magnetic force.

In the second position of the floater, the metallic element and the magnet are disconnected due to the water lifting force so when the water lifting force exceed the magnetic force between the metallic element and the magnet this two elements disconnects and the floater with the indication element are moving into the second position in which the indication element is visible for the user and informs about the necessity of emptying the water collecting container.

In a preferred embodiment of the invention the magnet or the metallic element is overmoulded in a bottom wall of the water collecting container. The positive effect is that the mounting time is reduced. The metallic element and the magnet are significant elements of the water level detection device. The metallic element is fixed to the body of the floater and the magnet is fixed with the bottom wall of the water collecting container. The metallic element can be positioned on the bottom wall of the water collecting container and the magnet can be positioned on the body of the floater interchangeably.

In a preferred embodiment of the invention the magnet or the metallic element is placed in a socket of the bottom wall of the water collecting container. The bottom wall of the water collecting container is provided with a socket in which the magnet or the metallic element can be inserted during assembling on the assembly line.

In another embodiment of the invention the bottom wall of the water collecting container is provided with an elongated element for receiving the magnet of the metallic element. The bottom wall of the water collecting container has an elongated element which is one element with the bottom wall. The positive effect is that the part can be produced in simple way in one injection molding process. The elongated element can be produced as separate part and can be assembled with the bottom wall of the water collecting container during the production process.

In a preferred embodiment of the invention the indication element is placed on the upper surface of the floater. The indication element is a part which is visible for the consumer when the water level in the water collecting container exceeds the safe water lever. Thanks to the indication element the consumer knows that the water collecting container has to be emptied immediately and therefore the water spilling can be avoided easily.

The object of the present invention is solved by a coffee machine comprising a water collecting container with a water level detection device described above.

The present invention enables a coffee machine with a water level detection device inside a water collecting container of a simple construction and reliable functioning.

### Brief description of the figures

Further details of embodiments of the invention together with additional objects and corresponding advantages will be best understood from the following description of specific embodiments and in connection with the accompanying drawings.

In the drawing:
Fig. 1 shows a water collecting container and a water level detection device in isometric view,
Fig. 2 shows a cross-section of a water collecting container and a water level detection device in a first position,
Fig. 3 shows a water level detection device cross-section.

### Detailed description of the invention

With reference to the attached drawing the technical contents and detailed description of the present invention are describe thereinafter according to a preferable embodiment being not used to limit its executing scope. Any equivalent variation and modification made according to the appended claims is also covered by the claims claimed by the present invention.

In the following description of the preferred embodiments of the present invention, similar identical reference numbers designate identical or comparable components.

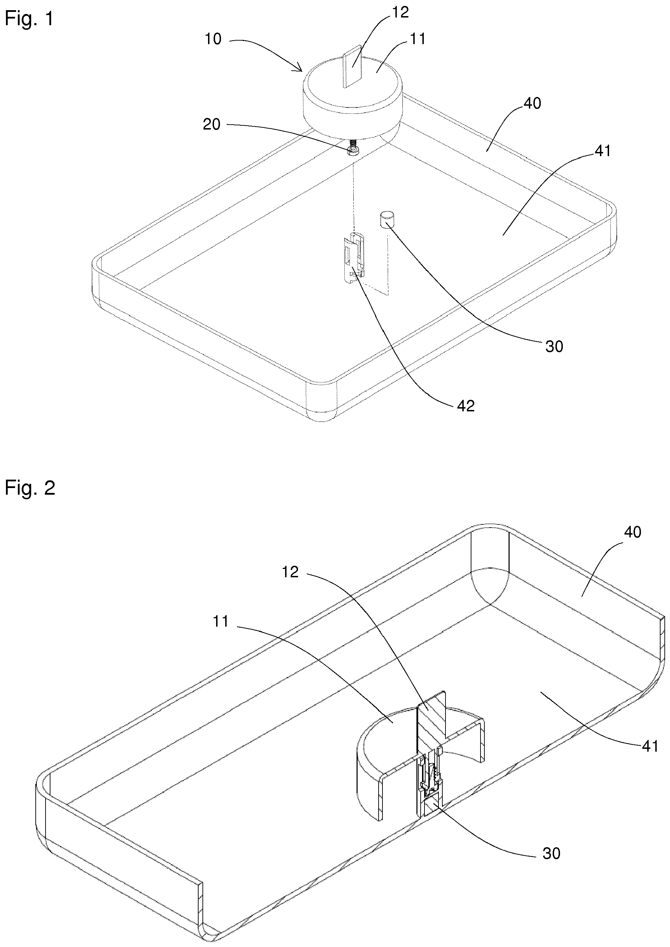

Fig. 1 shows a water collecting container 40 and a water level detection device 10 isometric view. The water collecting container 40 is a simple receptacle in which the water from the coffee machine is collected. The shape of the water collecting container 40 is rectangular and consist of a bottom wall 41 and side walls. The water collecting container 40 is inserted into the coffee machine bottom area (not shown on the figure) to collect water and condensed steam which is created during the brewing process. The bottom wall 41 of the water collecting container 40 has an elongated element 42 for receiving the metallic element 20. The magnet 30 is permanently connected with the bottom wall 41 of the water collecting container 40 by overmoulding. The elongated element 42 has a shape which is design to receive the metallic element 20 which is e.g. a screw. The floater 11 has a floater body with an indication element 12. The indication element 12 is a simple protrusion and it is placed on an upper side of the floater 11 and when the floater 11 is in its second position, the indication element 12 is visible for the user. Preferably the indication element 12 of the floater 11 is of a distinct color e.g. red.

Fig. 2 shows a cross-section of a water collecting container 40 with a water level detection device 10 in a first position. The first position of the water level detection device 10 is when the metallic element 20 and the magnet 30 are connected by a magnetic force and the water collecting container 40 is empty or the water level is insignificant what means that the water lifting force is smaller than the magnetic force between the metallic element 20 and the magnet 30. In the first position the water level detection device 10 is placed in the vicinity of the bottom wall 41 of the water collecting container 40.

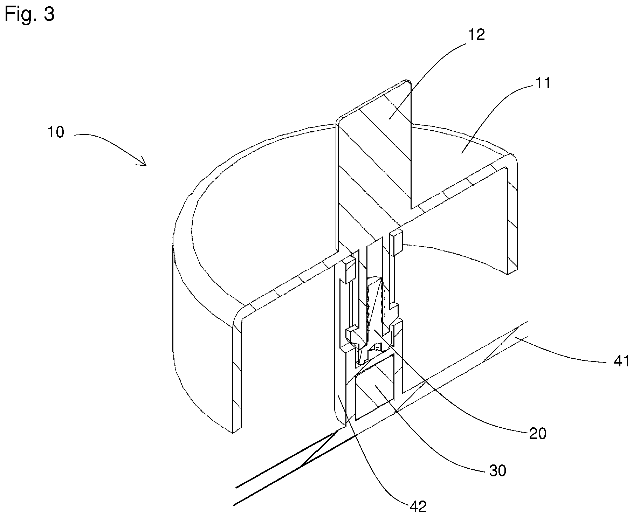

Fig. 3 shows a water level detection device 10 in cross-section. The water level detection device 10 consist of a floater 11, an indication element 12 and a metallic element 20. The metallic element 20 is detachably connected with a magnet 30 which is fixed to the bottom wall 41 of the water collecting container 40 (not shown on the figure). The floater 11 is movably connected with the elongated element 42 which is a part of the bottom wall 41 of the water collecting container 40.

The present invention enables a coffee machine with a water level detection device inside a water collecting container of a simple construction and reliable functioning.

### REFFERENCE SIGNS

- 10: water level detection device
- 11: floater
- 12: indication element
- 20: metallic element
- 30: magnet
- 40: water collecting container
- 41: bottom wall
- 42: elongated element

## Claims

1. A water level detection device (10), in particular for a water collecting container (40) comprising a floater (11) with an indication element (12), a metallic element (20) and a magnet (30), **characterized by** a first position of the floater (11) in which the metallic element (20) and the magnet (30) are connected by a magnetic force and a second position of the floater (11) in which the metallic element (20) and the magnet (30) are disconnected due to a water lifting force.

2. The water level detection device (10) according to claim 1, **characterized in that** the magnet (30) or the metallic element (20) is overmoulded in a bottom wall (41) of the water collecting container (40).

3. The water level detection device (10) according to claim 1, **characterized in that** the magnet (30) or the metallic element (20) is placed in a socket of the bottom wall (41) of the water collecting container (40).

4. The water level detection device (10) according to any of the preceding claims, **characterized in that** the bottom wall (41) of the water collecting container (40) is provided with an elongated element (42) for receiving the magnet (30) or the metallic element (20).

5. The water level detection device (10) according to claim 4, **characterized in that** the indication element (12) is placed on the upper surface of the floater (11).

6. A coffee machine comprising a water collecting container (40) with a water level detection device (10) according to any of the preceding claims.
